# EUROPEAN PATENT APPLICATION

(11) **EP 3 165 291 A1**
(43) Date of publication of application: **10.05.2017**
(21) Application number: 15193296.9
(22) Date of filing: 05.11.2015
(51) Int. Cl.: B07B 1/15, B07B 13/00, B03B 9/06, B29B 17/02

(54) **APPARATUS AND METHOD FOR SORTING STRING MATERIAL FROM WASTE**

(71) Applicant: Bollegraaf Patents and Brands B.V., 9902 AM Appingedam (NL)
(72) Inventor: Benjamins, Jan, 7916 PB Elim (NL)
(74) Representative: V.O.

(57) **Abstract**

Sorting string material (16) from waste (12) in a cyclic succession including a waste sorting stage and a string removal stage. In the waste sorting stage, a string catcher shaft (4) carrying radially projecting string catching members (6) is rotated, while feeding waste (12) into contact with the rotating string catching members (6). The string catching members (6) catch string material (16) from the waste (12), winding-up the string material (16) and allowing a remainder of the waste material to pass by. In the string removal stage, at least the string catching members (6) or the string cutters (15) pass closely, one along the other, the string cutters (15) cutting off string material (16) caught by the string catching members (6). Then, the string catcher shaft (4) and the string cutting structure are returned into an operating position in which the string cutters (15) are spaced from the string catching members (6). An apparatus (1, 101) and a rotor body (33) for use therein are also described.

## Description

### FIELD AND BACKGROUND OF THE INVENTION

The invention relates to an apparatus and a method for sorting string material from waste.

Waste material that is to be recycled, such as paper and cardboard waste and plastic waste is often pressed into bales for transportation. The bales are typically tied using string material, such as plastic or steel wire, tape or strip material or cord of twined or otherwise mutually engaged filaments or tape. Also other waste material often contains significant amounts of string material. In pre-sorted material, the string material is often of another type of material than the pre-sorted material. Also, when processing waste material, string material tends to become entangled in machinery, thereby reducing effectivity and/or efficiency of operation and causing a risk of damage to the machinery. In particular in sorting screens, string material tends to be wound-up around shafts and rotor bodies of the sorting screen. Although it has been attempted to reduce the tendency of string material to wind-up in sorting screens by providing special rotor designs, winding of string material still occurs and removal of string material from sorting screens is cumbersome and requires the sorting screen to be stopped, which reduces productivity.

### SUMMARY OF THE INVENTION

It is an object of the present invention to provide a solution for sorting out string material from waste material.

According to the invention, this object is achieved by providing an apparatus according to claim 1. The invention can also be embodied in a method according to claim 6.

The apparatus and method according to the invention allows periodically bringing the string catcher shaft and the string cutting structure from an operating position for causing string material from the waste to wind-up around the string catcher shaft into a string cutting configuration in which the string catching members and the string cutters are suspended for passing closely, one along the other, so that string material caught by the string catching members is periodically cut off by the string cutters. Thus, a waste sorting stage in which string material is sorted out of the waste material, is periodically interrupted by a string removal stage in which caught string material is removed from the string catcher shaft and string catching members. Because caught string material is first wound-up and then cut off from the string catcher shaft and string catching members, the string material is cut into relatively short ends, which can be dispensed of relatively easily and show no or only little tendency of winding-up again or onto other parts of machinery.

The invention may also be embodied in a rotor according to claim 17, which is particularly suitable for use in an apparatus and a method according to the invention.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a schematic side view of an example of an apparatus according to the invention;
Fig. 2 is a schematic view along the line II-II in Fig. 1 of a variant of the apparatus shown in Fig. 1;
Fig. 3 is a perspective view from above of the apparatus shown in Fig. 2; and
Fig. 4 is a perspective view from below of the variant of the apparatus shown in Figs. 2 and 3.

### DETAILED DESCRIPTION

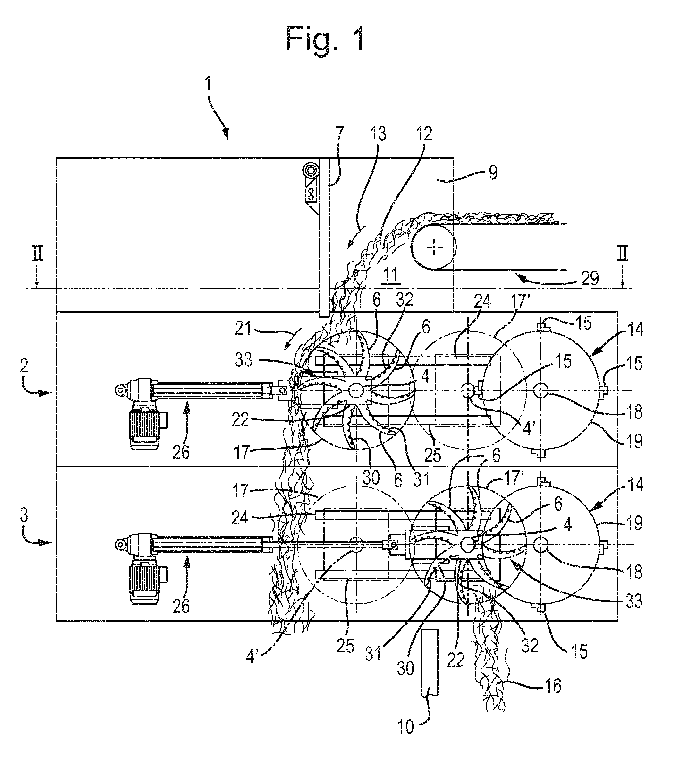

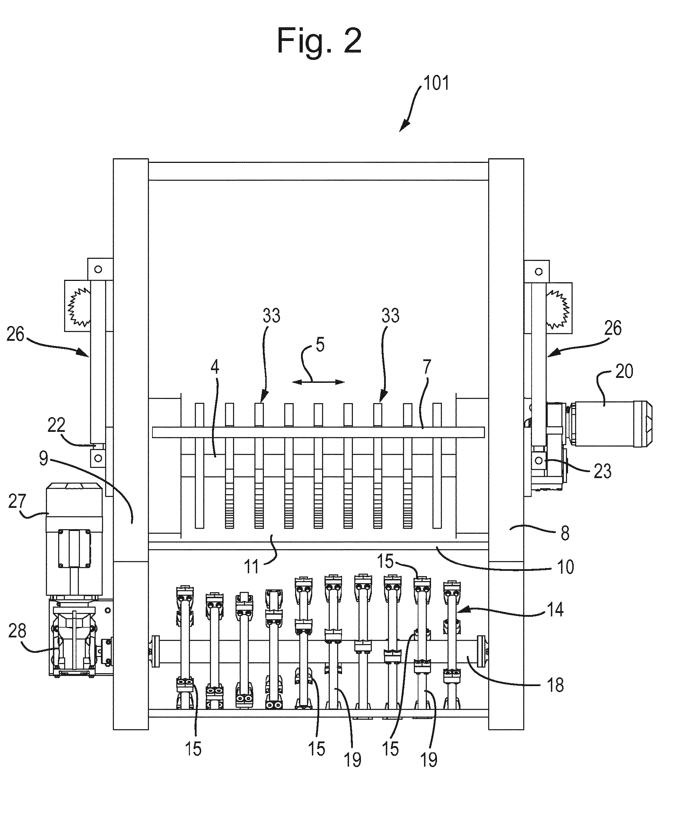

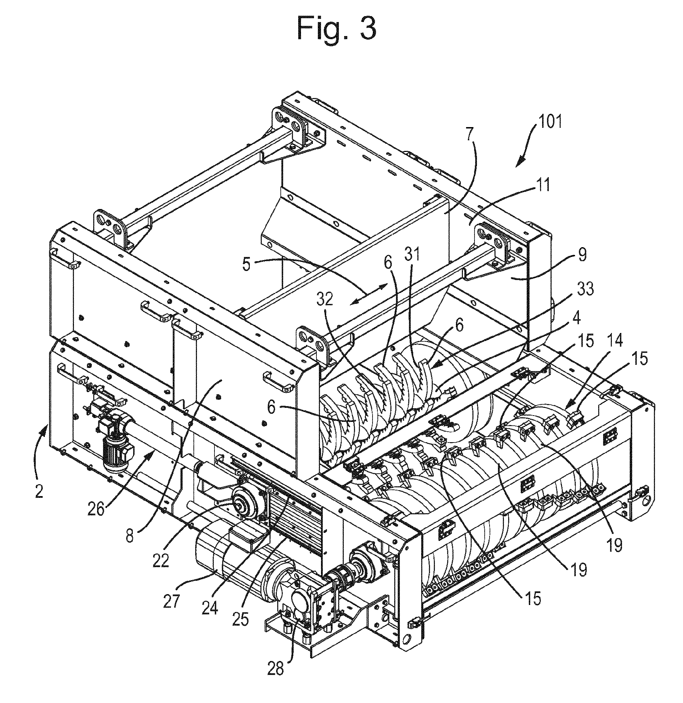

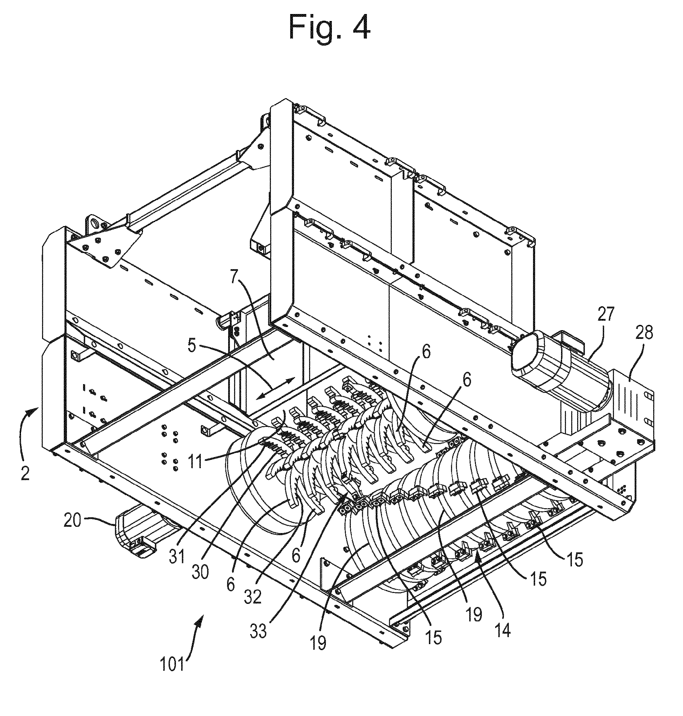

In Fig. 1, an example of an apparatus 1 according to the invention is shown, which has a first string sorting station 2 and a further string removing station 3. In Figs. 2-4 a variant of this example in the form of an apparatus 101 is shown, which has a first string removing station 2 only. A further string removing station 3 as shown in Fig. 1 may be added to such an apparatus and the apparatus shown in Fig. 1 may be equipped with one single string removing station 2 only so that an apparatus as shown in Figs. 2-4 is obtained. Since the stations 2 and 3 in Fig. 1 as well as the station 2 in Figs. 2-4 are all equal, corresponding parts and portions of these stations 2, 3 are all designated by the same reference numbers and both examples will be described in combination except features of and relating to the further string removing station 3.

The apparatus according to the present example has a rotatable, driven string catcher shaft 4 oriented in an axial direction 5. The string catcher shaft 4 carries radially projecting string catching members 6 (only some of the string catching members are designated by reference numerals) that are fixed to the string catcher shaft 4 for co-rotation with the string catcher shaft 4. A motor 20 is provided for driving the string catcher shaft in a sense of rotation 21 (Fig. 1).

The apparatus has walls 7, 8, 9, 10 bounding a feeding channel 11 for guiding waste 12 (Fig. 1) into contact with the string catching members 6 in a conveying direction 13 (Fig. 1) transverse to the string catcher shaft 4.

The apparatus 1, 101, further has a string cutting structure 14 having string cutters 15 (only some of the string cutters are designated by reference numerals).

As is best seen in Fig. 1, the string catcher shaft is displaceable between an operating position, in which the string cutters 15 are spaced from the string catching members 6 for allowing string material from the waste 12 to wind-up around the string catcher shaft 4 (see string removing station 2 and position 4' in string removing station 3 in Fig. 1) and a string cutting position in which the string catching members 6 and the string cutters 15 are suspended for passing closely, one along the other, for causing string material caught by the string catching members 6 to be cut off by the string cutters 15 (see string removing station 3 and position 4' in string removing station 2 in Fig. 1).

For allowing displacement of the string catcher shaft 4 between the operating position and the string cutting position, the string catcher shaft 4 is rotatably suspended via bearing units 22, 23 that are slidable along rails 24, 25 (a pair of rails is also provided at the opposite end of the string catcher shaft 4, but not visible in the drawings). For driving displacement of the string catcher shaft 4 between the operating position and the string cutting position, linear drives 26 are provided at opposite sides of the apparatus 1, 101. In this example, the linear drive is a rack and pinion actuator, but other drives, such as a screw actuator, a belt or chain drive or hydraulic or pneumatic cylinders are in principle also suitable.

In operation, string material 16 (Fig. 1) is removed from the waste 12 in a cyclic succession of:
1. a waste sorting stage
2. a first transfer stage
3. a string removal stage and
4. a second transfer stage.

During the waste sorting stage, the string catcher shaft 4 is rotated about its centerline oriented in the axial direction 5. The radially projecting string catching members 6 co-rotate with the string catcher shaft 4. Waste 12 is brought into contact with the rotating string catching members 6 in the conveying direction 13 transverse to the string catcher shaft 4. The string catching members 6 catch string material from the waste 12 and wind-up the caught string material around the string catcher shaft 4 and to some extent also partially around the string catching members 6. A remainder of the waste material 12 is allowed to pass by while the string cutting structure 14 with the string cutters 15 is spaced from the string catching members 6 (Fig. 1: position 4 in station 2 and position 4' in station 3) allowing string material from the waste 12 to wind-up around the string catcher shaft 4. In this manner, in particular longer string material, which tends to wind around shafts of a sorting screen and constitutes a large portion of the undesired string material, is at least to a large extent, removed from the waste 12. Gradually, the amount of string material that has been collected around the string catcher shaft 4 and the string catching members 6 will have increased to such an extent that the string catching members 6 would become significantly less effective at catching string material out of the passing waste 12 if even more string material would be collected around the string catcher shaft 4.

To avoid collection of excessive amounts of string material around the string catcher shaft 4, the first transfer stage is started in which the string catcher shaft 4 is brought into a string cutting position (Fig. 1: position 4 in station 3 and position 4' in station 2) in which the string catching members 6 and the string cutters 15 are configured to pass closely, one along the other.

Next, in the string removal stage, the string catching members 6 and the string cutters 15 are moved closely, one along the other, the string cutters 15 cutting off string material caught by the string catching members 6 off from the string catching members 6 and the string catcher shaft 4. The string material 16 cut off from the string catching members 6 and the string catcher shaft 4 drops away from the string catching members 6 and the string catcher shaft 4 and is collected separately from the remainder of the waste 12 that may now be processed further with no or much less disturbance due to string material as was present in the waste material 12. It is noted that the string removal stage may be started prior to completion of the first transfer stage, for instance just before the string cutters 15 start passing close enough along the string catching members 6 for cutting string material off from the string catching members 6.

After all or most string material has been cut off the string catcher shaft 4 and the string catching members 6, the second transfer stage is started, which includes bringing the string catcher shaft 4 back into the operating position in which the string cutters 15 are spaced from the string catching members 6 for allowing string material from the waste 12 to wind-up around the string catcher shaft 4. Subsequently, a next waste sorting stage is started.

Thus, the waste sorting stage of the station 2, in which string material is sorted out of the waste material, is periodically interrupted by the string removal stage in which caught string material is removed from the string catcher shaft 4 and string catching members 6. Because caught string material is first wound-up and then cut off from the string catcher shaft 4 and string catching members 6, the string material is cut into relatively short ends, which can be dispensed of relatively easily and show no or only little tendency of winding-up again or onto other parts of machinery.

To ensure that catching of the string material by the string catching members 6 is not disturbed by too close presence of the string cutters 15, in the operating position, seen in said axial direction, all of the string cutters 15 are radially outside of contours 17 (Fig. 1) of rotary trajectories of the string catching members 6. In the string cutting position, the string cutting structure 14 projects between the contours of the rotary trajectories 17' (Fig. 1) of the string catching members 6. To ensure effective cutting and stripping off of the caught string material, preferably the string catcher shaft 4, string catching members 6 and the string cutters 15 are suspended and arranged such that the distance at which on the one hand the string cutters 15 and, on the other hand the string catcher shaft 4 and the string catching members 6 pass by each other is at most 10 mm and preferably at most 5 mm. On the other hand, this distance and tolerances should preferably be designed such that the string cutters 15 do not touch the string catcher shaft 4 or any of the string catching members 6. After cutting, some of the string material may be left back on the string catcher shaft 4 and the string catching members 6.

The string cutting structure 4 is composed of a shaft 18 carrying rotors 19 (only some of the rotors are designated by reference numerals) on which the string cutters 16 are mounted. In the string cutting position, the rotors 19 are interleaved with the contours 17' of rotary trajectories of the string catching members 6. Thus, a simple string cutting structure is provided that allows string cutters to be moved closely and accurately past the string catching members 6 and the string catcher shaft 4. More in general: by moving the string cutters past the string catching members (which may also be achieved in another manner, e.g. by reciprocating movement or movement along a guide rail) for cutting off the caught string material from the string catching members 6, cutting and stripping off of the string material is achieved in a reliable manner. For driving rotation of the string cutter shaft 18, a motor 27 and a transmission 28 are provided.

To ensure that string material is cut and stripped from all the string catching members 6 distributed around the string catcher shaft 4, preferably, the string catcher shaft 4 is rotated during the string removal stage. The string cutter shaft 18 is preferably rotated at a rate of 20 - 250 rpm and more preferably about identical to the rate of rotation of the string catcher shaft 4. Some difference in the rate of rotation is advantageous for ensuring that, over time, the cutters 15 pass along zones of the string catcher shaft 4 and the string catching members 6 that are close together and string material is ultimately stripped from virtually all surface portions of the string catcher shaft 4 and the string catching members 6.

Although it is also possible to provide that transfer between the operating configuration and the string cutting configuration is achieved by moving the string cutting structure or both the string cutting structure and the string catcher shaft, it is preferred that in the first transfer stage, the string catcher shaft 4 moves from the waste feeding path 11 towards the string cutters 16. Since the string catcher shaft 4 is thereby moved out of the waste feeding path 11, string material 16 that is cut and stripped off from the string catcher shaft 4 and the string catching members 6 drops away along another path, from where it can easily be guided to a location separate from the stream of waste 12.

If a single string catcher shaft or set of string catcher shafts is provided, a stream of waste 12 should preferably be interrupted from the start of the first transfer stage to the end of the second transfer stage or it has to be accepted that string material is temporarily not separated from the waste 12. By providing that, as in the example shown in Fig. 1, in addition to the first string removal station 2, a further string removal station 3 is provided, and that, if the first station 2 is operating in its string removal stage, the further station 3 is operating in its waste sorting stage and that, if the further station 3 is operating in its string removal stage, the first station 2 is operating in its waste sorting stage, the first station and the further station can continuously be fed with waste 12 from a common source, such as in this example a belt conveyor 29, without waste 12 temporarily passing by completely unsorted during removal of string material from the string material catcher shaft 4 and the string catching members 6. While string material is removed from the string catcher shaft 4 and the string catching members 6 of the first station 2, waste 12 is fed to the string catcher shaft 4 and the string catching members 6 of the further station 3, where string material is caught from the stream of waste 12 and vice versa, so that alternatingly string material is caught by the first or further station while string material is removed from the catching shaft and members of the further or, respectively first station.

The further station 3 is operating downstream of the first station 2, so that the string catching shaft and members of the two stations can be in the waste channel 11 simultaneously and at changeover the separation of string material from the waste 12 can be maintained at full effectiveness.

To ensure that always one of the two stations 2 and 3 is in the operating position, in each operating cycle, the first transfer stage of the first or further station 2, 3 is started after the waste sorting stage of the other one of the first and further stations has started.

Leading sides or edges 30 of the string catching members 6 have distal portions 31 oriented, in distal direction, with a directional component in the sense of rotation 21 in which the string catcher shaft 4 is driven. Thus, in operation the leading sides or edges of the string catching members 6 function as hooks catching the string material, so that string material is effectively caught and retained by the string catching members 6. For effectively retaining caught string material, it is further provided that the leading sides or edges 30 of the string catching members 6 have notches 32 which further assist in refraining caught string material from slipping off the string catching members. Instead of or in addition or combination with notches, projections, such as teeth, can be provided for the same purpose. In the present example, the string catching members 6 are provided in the form of elongate members of rotor bodies 33 having a passage for receiving the string catcher shaft 4. A plurality of the string catching members 6 is circumferentially distributed around a central axis of rotation and the string catching members 6 project radially outwardly from the axis of rotation relative to intermediate recessed portions of the outer circumference of each of the rotor bodies 33.

As is best seen in Fig. 1, the feeding of the waste 12 into contact with the rotating string catching members 6 is carried out by dropping waste 12 onto the rotating string catching members 6. This is advantageous for causing string material to be caught between successive catching members 6. However, alternative arrangements are also possible, for instance passing waste along string catching members on a conveyor track or through a chute.

In the waste sorting stage, the string catching members 6 are preferably rotated with 20 - 250 rpm. This is on the one hand sufficiently slow to allow string material to enter between successive string catching members 6 and sufficiently fast to reliably entrain string material, so that it is wound around the string catcher shaft 4.

As is also best seen in Fig. 1, in the waste sorting stage, the string catching members are rotated in a sense of rotation 21 in which a portion of the string catching members 6 above the string catcher shaft 4 is moving away from the string cutters 15. Thus, waste and string material therein is initially deflected away from the string cutters 15, so that soiling of the string cutters 15 and winding of string material around the string cutter shaft 18 is at least reduced.

In the string removal stage, the string catching members 6 are preferably rotated in the same sense of rotation 21 as in the waste sorting stage. Thus, caught string material that is engaged by the string cutters 15 is pulled taut and reliably cut, thereby reducing its length, with little tendency to be pulled off the string catcher shaft 4 without being cut.

Several features have been described as part of the same or separate embodiments. However, it will be appreciated that the scope of the invention also includes embodiments having combinations of all or some of these features other than the specific combinations of features embodied in the examples.

## Claims

1. An apparatus for sorting string material (16) from waste (12), comprising:
a rotatable, driven string catcher shaft (4) oriented in an axial direction, said string catcher shaft (4) carrying radially projecting string catching members (6) fixed to the string catcher shaft (4) for co-rotation with the string catcher shaft (4);
a feeding channel (11) for guiding waste (12) into contact with the string catching members (6) in a conveying direction (13) transverse to the string catcher shaft (4); and
a string cutting structure having string cutters (15);
wherein at least the string catcher shaft (4) or the string cutting structure (14) is displaceable between an operating position in which the string cutters (15) are spaced from the string catching members (6) for allowing string material (16) from the waste (12) to wind-up around the string catcher shaft (4) and a string cutting position in which the string catching members (6) and the string cutters (15) are suspended for passing closely, one along the other, for causing string material (16) caught by the string catching members (6) to be cut off by the string cutters (15).

2. An apparatus according to claim 1, wherein, in the operating position, seen in said axial direction, all of the string cutters (15) are radially outside of contours (17) of rotary trajectories of the string catching members (6), and wherein, in the string cutting position, the string cutting structure (14) projects between the contours (17') of rotary trajectories of the string catching members (6).

3. An apparatus according to claim 1 or 2, wherein the string cutting structure comprises a shaft (18) carrying rotors (19) on which the string cutters (15) are mounted, and wherein, in the string cutting position, the rotors (19) are interleaved with contours (17') of rotary trajectories of the string catching members (6).

4. An apparatus according to any of the preceding claims, further comprising a drive (20) for driving the string catcher shaft (4) in a sense of rotation (21), wherein leading sides or edges (30) of the string catching members (6) have distal portions (31) oriented, in distal direction, with a directional component in said sense of rotation (21).

5. An apparatus according to any of the preceding claims, further comprising a drive (20) for driving the string catcher shaft (4) in a sense of rotation (21), wherein leading sides or edges (30) of the string catching members (6) have at least notches (32) or projections.

6. A method for sorting string material (16) from waste (12), comprising a cyclic succession of:
a waste sorting stage comprising:
- rotating a string catcher shaft (4) about its center line oriented in an axial direction (5), said string catcher shaft (4) carrying radially projecting string catching members (6) co-rotating with the string catcher shaft (4); and
- feeding waste (12) into contact with the rotating string catching members (6) in a conveying direction (13) transverse to the string catcher shaft (4), the string catching members (6) catching string material (16) from the waste (12), winding-up the caught string material (16) and allowing a remainder of the waste (12) to pass by while a string cutting structure (14) having string cutters (15) is spaced from the string catching members (6) allowing string material (16) from the waste (12) to wind-up around the string catcher shaft (4);
a first transfer stage comprising:
- bringing at least one of the string catcher shaft (4) and the string cutting structure (14) into a string cutting position in which the string catching members (6) and the string cutters (15) are configured to pass closely, one along the other;
a string removal stage comprising:
- moving at least the string catching members (6) or the string cutters (15) closely, one along the other, the string cutters (15) cutting off string material (16) caught by the string catching members (6); and
a second transfer stage comprising:
- returning said at least one of the string catcher shaft (4) and the string cutting structure (14) into an operating position in which the string cutters (15) are spaced from the string catching members (6) for allowing string material (16) from the waste (12) to wind-up around the string catcher shaft (4).

7. A method according to claim 6, further comprising rotating the string catcher shaft (4) during the string removal stage.

8. A method according to claim 6 or 7, further comprising moving the string cutters (15) past the string catching members (6) for cutting off the caught string material (16) from the string catching members (6).

9. A method according to any of the claims 6-8, wherein, in the waste (12) sorting stage, the string catching members (6) receive waste (12) fed along a waste (12) feeding path (11) and wherein, in the first transfer stage, the string catcher shaft (4) moves from the waste (12) feeding path (11) towards the string cutters (15).

10. A method according to claim 9, wherein said string catcher shaft (4), said string catching members (6), said string cutting structure (14) and said string cutters (15) are part of a first station (2) for removing string material (16) from waste (12), further comprising operating a further station (3) for removing string material (16) from waste (12) in accordance with the method according to claim 1, wherein if the first station (2) is operating in its string removal stage, the further station (3) is operating in its waste (12) sorting stage and if the further station (3) is operating in its string removal stage, the first station (2) is operating in its waste (12) sorting stage, the first station and the further station being fed with waste (12) from a common source.

11. A method according to claim 10, wherein the further station (3) is operating downstream of the first station (2).

12. A method according to claim 11, wherein, in each operating cycle, the first transfer stage of the first or further station (2, 3) is started after the waste (12) sorting stage of the other one of the first and further stations (3, 2) has started.

13. A method according to any of the claims 6-12, wherein the feeding of the waste (12) into contact with the rotating string catching members (6) is carried out by dropping waste (12) onto the rotating string catching members (6).

14. A method according to any of the claims 6-13, wherein, in the waste (12) sorting stage, the string catching members (6) are rotated with 20 - 250 rpm.

15. A method according to any of the claims 6-14, wherein, in the waste (12) sorting stage, the string catching members (6) are rotated in a sense of rotation (21) in which a portion of the string catching members (6) above the string catcher shaft (4) is moving away from the string cutters (15).

16. A method according to any of the claims 6-15, wherein, in the string removal stage, the string catching members (6) are rotated in a same sense of rotation as in the waste (12) sorting stage.

17. A rotor body (33) for a sorting apparatus (1; 101) according to any of the claims 1-5, the rotor body (33) having a passage for receiving a shaft (4), a plurality of string catching members (6) circumferentially distributed around a central axis of rotation and projecting radially outwardly from the axis of rotation relative to intermediate recessed portions of the outer circumference, wherein leading sides or edges of the string catching members (6) have at least notches (32) and/or projections.
